(19) **Europäisches Patentamt / European Patent Office / Office européen des brevets**

(11) **EP 2 703 640 B1**

(12) **EUROPÄISCHE PATENTSCHRIFT**

(45) Veröffentlichungstag und Bekanntmachung des Hinweises auf die Patenterteilung:
**22.08.2018 Patentblatt 2018/34**

(51) Int Cl.:
*F03D 13/10* (2016.01)   *F03D 13/20* (2016.01)
*E04H 12/34* (2006.01)

(21) Anmeldenummer: **12006083.5**

(22) Anmeldetag: **28.08.2012**

(54) **Verfahren zur Auslegung eines Turmes für eine Windenergieanlage sowie Turm für eine Windenergieanlage**

Method for constructing a tower for a wind energy assembly and tower for a wind energy assembly

Procédé de conception d'une tour pour une éolienne ainsi que tour pour une éolienne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.03.2014 Patentblatt 2014/10**

(73) Patentinhaber: **Nordex Energy GmbH**
**22419 Hamburg (DE)**

(72) Erfinder:
• **Stopper, Juliane**
**21337 Lüneburg (DE)**
• **Förch, Matthias**
**22081 Hamburg (DE)**

(74) Vertreter: **Hauck Patentanwaltspartnerschaft mbB**
**Postfach 11 31 53**
**20431 Hamburg (DE)**

(56) Entgegenhaltungen:
EP-A1- 2 436 924    DE-A1-102010 023 887
US-A- 4 272 929    US-A1- 2011 056 151
US-B1- 6 467 233

• DIN: "DIN 1055-4 Einwirkungen auf Tragwerke - Teil 4: Windlasten. Anhang", DEUTSCHE NORMEN. DIN NORM,, Bd. 1055-4, 1. März 2005 (2005-03-01), Seiten 78-101, XP009166334,

EP 2 703 640 B1

**Beschreibung**

Die vorliegende Erfindung betrifft ein Verfahren zur Auslegung eines Turmes für eine Windenergieanlage sowie einen solchen Turm. Bei der Auslegung des Turmes für eine Windenergieanlage sind die durch die anströmende Luft hervorgerufenen Querschwingungen des Turmes zu berücksichtigen. Querschwingungen sind dabei diejenigen Schwingungen, bei denen die Auslenkungen des Turmes im Wesentlichen quer zur Anströmrichtung erfolgen. Diese Querschwingungen werden durch sich wechselseitig, quasi periodisch ablösende Wirbel, sogenannte Kármán'sche Wirbel, hervorgerufen.

Aus DE 103 36 998 A1 ist eine Windenergieanlage mit einem Turm und einem darauf angeordneten Turmkopf bekannt geworden. Ein aus Faserverbundwerkstoff hergestellter Turmkopfadapter ist dabei zwischen dem Turm und dem Turmkopf vorgesehen, wodurch der Turmkopf auch bei starken Böen eine gewisse Flexibilität besitzt. Der Turmkopfadapter besitzt dabei einen sich konisch zum Turmkopf hin verbreiternden Durchmesser.

Aus WO 99/63219 ist eine Windenergieanlage bekannt geworden, deren Turm in seinem oberen Bereich nahe dem Turmkopf mit einer aktiven Dämpfungseinrichtung versehen ist. Weitere Dämpfungseinrichtungen sind vorgesehen, um Schwingungen der Rotorblätter zu verhindern.

Aus DE 296 12 720 U1 ist eine Windkraftanlage bekannt geworden, deren Turm in seinem oberen Bereich sich konisch erweitert.

Aus US 7,997,876 B2 ist eine Windenergieanlage mit einem Turm bekannt geworden, der im Bereich der Blattspitze einen verringerten Durchmesser besitzt, um eine Berührung des Rotorblatts mit dem Turm zu vermeiden.

Von der errichteten Windenergieanlage "Seewind 52" mit einer Nennleistung von 750 kW ist ein doppelkonischer Stahlrohrmast als Turm der Windenergieanlage bekannt. Die Taille des Stahlrohrmasts befindet sich ungefähr in einem Abstand von der Gondel, der der halben Rotorblattlänge entspricht.

Aus DE 10 2011 051 092 A1 ist eine Windenergieanlage mit einem Mast bekannt geworden, der mindestens teilweise mit einer den Strömungswiderstand reduzierenden Oberfläche ausgestattet ist. In diesem Zusammenhang ist auch bekannt geworden, einen im Wesentlichen zylindrischen Turm in seinem Inneren mit Aussteifungen zu versehen, um den Durchmesser des Turms reduzieren zu können.

Aus US 4,272,929 ist ein Turm für eine Windenergieanlage bekannt, der Abschnitte mit unterschiedlichen Turmdurchmessern aufweist.

Aus US 6,467,233 B1 ist ein Turm für eine Windenergieanlage bekannt geworden, der aus einer Vielzahl von Abschnitten besteht, die unten einen größeren Durchmesser als im oberen Teil des Turms besitzen. Der Übergang wird über konisch sich verjüngende Abschnitte erzielt.

Der Erfindung liegt die Aufgabe zugrunde, ein Verfahren zur Auslegung eines Turmes für eine Windenergieanlage sowie einen Turm selbst bereitzustellen, bei dem eine unzulässig hohe Beanspruchung der Konstruktion durch Querschwingungen des Turmes vermieden wird.

Erfindungsgemäß wird die Aufgabe durch ein Verfahren mit den Merkmalen aus Anspruch 1 gelöst. Vorteilhafte Weiterbildungen des Verfahrens bilden die Gegenstände der Unteransprüche.

Das erfindungsgemäße Verfahren dient zur Auslegung eines Turmes für eine Windenergieanlage, wobei der Turm auch sein Fundament umfasst. Neben zahlreichen Belastungen, die für die Auslegung des Turmes einer Windenergieanlage im Hinblick auf die Tragfähigkeit und Gebrauchstauglichkeit zu berücksichtigen sind, sind Querschwingungen insbesondere bei sehr hohen Türmen ein wichtiger Aspekt für die Dimensionierung des Turmes. Mit dem erfindungsgemäßen Verfahren wird der Turm so dimensioniert, dass eine unzulässig hohe Beanspruchung des Turmes durch Querschwingungen vermieden wird. Erfindungsgemäß ist dazu der Verfahrensschritt vorgesehen, eine Auslegungswindgeschwindigkeit ($v_0$) abhängig von einer mittleren Windgeschwindigkeit an einem Standort der Windenergieanlage zu bestimmen. Die Auslegungswindgeschwindigkeit ist dabei nicht unbedingt die Windgeschwindigkeit, die an dem Standort der Windenergieanlage am häufigsten auftritt. Beispielsweise kann die Auslegungswindgeschwindigkeit um einen konstanten Faktor größer als die am häufigsten auftretende Windgeschwindigkeit gewählt werden. Zunächst werden Systemeigenfrequenzen der Gesamtanlage bestimmt, welche maßgebliche Anteile aus Turmbiegeeigenfrequenzen beinhalten (im Folgenden vereinfacht als Turmeigenfrequenz bezeichnet), da diese für eine Querschwingungsanregung bedeutsam sind. Der Turm besitzt hierfür einen Ausgangsdurchmesser. In einem weiteren Schritt wird ein kritischer Durchmesser bestimmt, bei dem die Wirbelablösefrequenz des mit der Auslegungsgeschwindigkeit angeströmten Turms der Turmeigenfrequenz entspricht und der Turm somit mit der Turmeigenfrequenz schwingt. Der Ausgangsdurchmesser muss um einen vorbestimmten Differenzwert von dem kritischen Durchmesser abweichen. Ist dies nicht der Fall, wird ein Anregungsabschnitt bestimmt, welcher einen zweiten Durchmesser aufweist und der eine Länge von mindestens dem 6-fachen des zweiten Durchmessers besitzt. Der zweite Durchmesser weicht dabei vom Ausgangsdurchmesser um mindestens den vorbestimmten Differenzwert ab. Dieser zweite Durchmesser reduziert die Einwirkungen aus den Querschwingungen. Der Durchmesser beeinflusst sowohl die Wirbelablösefrequenz, welche sich auf die Anzahl der Lastwechsel auswirkt, als auch die Schwingamplitude. Die Einwirkungen setzen sich aus der Anzahl der Lastwechsel und Höhe der Beanspruchungen infolge der Schwingamplitude zusammen. Der Anregungsabschnitt wird derart bestimmt, dass ein Schwingungsbauch in dem Anregungsabschnitt vorliegt, wenn der Turm mit der bestimmten Turmeigenfrequenz schwingt. Die Erfindung beruht auf der Erkenntnis, dass es zur Reduzierung von Querschwingungen ausreicht, einen Anregungsabschnitt des Turms und dessen Anregung gesondert zu betrachten. Der Anregungsabschnitt ist kürzer als der gesamte Turm, insbesondere ist der Anregungsabschnitt mindestens um den Turmdurchmesser kürzer als der gesamte Turm. Im Ergebnis führt das erfindungsgemäße Verfahren zu einem Turm, der im Wesentlichen einen Ausgangsdurchmesser besitzt und in seinem Anregungsabschnitt einen zweiten Durchmesser besitzt. Dadurch, dass der zweite Turmdurchmesser in dem Anregungsabschnitt von dem Ausgangsdurchmesser verschieden ist, wird eine Anregung des Turmes zu Querschwingungen in der Turmeigenfrequenz reduziert. Der zweite Durchmesser ist bevorzugt kleiner als der Ausgangsdurchmesser. Alternativ kann der zweite Durchmesser aber auch größer als der Ausgangsdurchmesser sein. Entscheidend ist ein ausreichend großer Abstand vom kritischen Durchmesser.

In einer bevorzugten Ausgestaltung wird der Differenzwert, der den Abstand zum kritischen Durchmesser vorgibt, derart gewählt, dass für den zweiten Durchmesser sowohl die Anzahl der Lastspiele als auch die Schwingamplitude für eine vorbestimmte Zeitdauer, beispielsweise ein Jahr oder 20 Jahre, die Festigkeit des Turms nicht beeinträchtigen und somit in einem tolerierbaren Bereich liegen.

In einer Ausgestaltung des erfindungsgemäßen Verfahrens wird eine neue Turmeigenfrequenz für den Turm mit dem zweiten Durchmesser im Bereich des Anregungsabschnitts bestimmt. Aufgrund der Durchmesseränderung im Anregungsabschnitt kann sich auch die Eigenfrequenz des Turmes verändern.

In einer bevorzugten Weiterbildung des erfindungsgemäßen Verfahrens erfolgt eine Überprüfung dahingehend, ob die neue Turmeigenfrequenz für den Turm mit dem zweiten Anregungsabschnitt von der Anregungsfrequenz der Wirbel beim Anströmen des Turmes mit Auslegungswindgeschwindigkeit verschieden ist. Die Anregungsfrequenz ist dabei proportional zu der Ablösefrequenz der Wirbel an dem Turm. Daraufhin können die Beanspruchungen für den Turm infolge wirbelerregter Querschwingungen, welche aus den Massenträgheitskräften des in Resonanz angeregten Turms resultieren, ermittelt werden. Der zweite Durchmesser für den Anregungsabschnitt wird variiert, wenn er nicht weit genug von einem neu bestimmten kritischen Durchmesser entfernt ist und die Beanspruchungen des Systems zu groß sind.

In einer möglichen Ausgestaltung des erfindungsgemäßen Verfahrens wird die erste Turmeigenfrequenz als die für Querschwingungen relevante Turmeigenfrequenz gewählt. Der Anregungsabschnitt ist dann in der oberen Hälfte des Turmes angeordnet. Bei der ersten Turmeigenfrequenz schwingt der Turm mit seiner auf dem Turm angebrachten Gondel, wobei die Amplitude mit zunehmender Höhe anwächst.

In einer alternativen Ausgestaltung des erfindungsgemäßen Verfahrens kann auch die zweite Turmeigenfrequenz für die Anwendung des erfindungsgemäßen Verfahrens gewählt werden. Bei der zweiten Turmeigenfrequenz schwingt der Turm mit einem Schwingungsbauch ungefähr in der Mitte des Turms, so dass der Anregungsabschnitt die Turmmitte umfasst und sich oberhalb und unterhalb dieser erstreckt.

Das erfindungsgemäße Verfahren kann auch nacheinander für die erste und die zweite Turmeigenfrequenz und gegebenenfalls weitere Turmeigenfrequenzen durchgeführt werden.

Erfindungsgemäß wird die Aufgabe auch durch einen Turm für eine Windenergieanlage gemäß Anspruch 8 gelöst. Vorteilhafte Ausgestaltungen bilden den Gegenstand der zugehörigen Unteransprüche.

Der erfindungsgemäße Turm für eine Windenergieanlage weist mindestens einen ersten Bereich mit einem ersten Durchmesser und einen zweiten Bereich mit einem zweiten Durchmesser auf. Der zweite Durchmesser ist von dem ersten Durchmesser verschieden, wobei der zweite Bereich mindestens eine Länge des 6-fachen Turmdurchmessers aufweist. Der maßgebende Turmdurchmesser für die Bestimmung der Länge des zweiten Bereichs ist bevorzugt der zweite Durchmesser, d.h. der Durchmesser im Anregungsabschnitt. Durch die Verwendung von zwei oder mehr Bereichen mit unterschiedlichen Durchmessern kann vermieden werden, dass der Turm in einem ungünstigen Frequenzbereich zu Schwingungen angeregt wird. Dem erfindungsgemäßen Turm liegt die Erkenntnis zugrunde, dass der sich bei der Auslegung des Turmes ergebende Durchmesser dazu führen kann, dass der Turm im Bereich der Auslegungswindgeschwindigkeit zu hohen Beanspruchungen infolge von Querschwingungen in der Turmeigenfrequenz ausgesetzt wird. Da die Anregungsfrequenz durch das Anströmen des Turmes direkt proportional zu seinem Durchmesser ist, kann die Anregung zu Querschwingungen durch einen jeweils, gegenüber dem Ausgangsdurchmesser, veränderten Durchmesser in zwei oder mehr Bereichen des Turmes reduziert oder vermieden werden.

Der erfindungsgemäße Turm für eine Windenergieanlage weist zur Reduzierung einer Anregung durch Querschwingungen mit der zweiten Turmeigenfrequenz mindestens zwei verschiedene Durchmesser auf. Hierbei befindet sich der zweite Bereich in der Turmmitte und erstreckt sich sowohl in die obere als auch in die untere Turmhälfte. Bei einer Schwingung des Turmes in der zweiten Turmeigenfrequenz tritt in einem mittleren Bereich des Turmes ein Schwingungsbauch auf, so dass zur Reduzierung einer Schwingungsanregung des Turmes in einem mittleren Bereich ein anderer Durchmesser, der wieder bevorzugt kleiner als der übrige Durchmesser ausgebildet ist, gewählt wird. Erfindungsgemäß ist der Turm auch mit zwei ersten Bereichen ausgestattet, die oberhalb und unterhalb des zweiten Bereichs angeordnet sind. Für den oder die Übergänge zwischen den Bereichen in einem Turm ist bevorzugt ein sich konisch erweiternder oder verjüngender Übergangsbereich vorgesehen.

Bei dem erfindungsgemäßen Turm liegt ein ausgewogenes Verhältnis zwischen der Wirbelablösefrequenz des Windes in dem zweiten Bereich vor, das Einfluss auf das Maß der Beanspruchungen hat. Da die Wirbelablösefrequenz abhängig von der Windgeschwindigkeit ist, wird diese für eine Auslegungswindgeschwindigkeit der Windenergieanlage bestimmt.

Ein bevorzugtes Ausführungsbeispiel wird anhand der nachfolgenden Figuren näher erläutert. Es zeigen:

Fig. 1      eine Verteilung der Häufigkeiten der Windgeschwindigkeiten an einem Standort der Windenergieanlage,

Fig. 2      den Zusammenhang zwischen der Wirbelablösefrequenz und der Windgeschwindigkeit,

Fig. 3      in einer schematischen Darstellung die Turmbiegeform für die erste Eigenfrequenz,

Fig. 4      die Turmbiegeform für die zweite Eigenfrequenz,

Fig. 5      einen Turm der Windenergieanlage, der gegen Querschwingungen mit der ersten Eigenfrequenz ausgelegt ist und

Fig. 6      ein Flussdiagramm zur Auslegung eines Turmes einer Windenergieanlage.

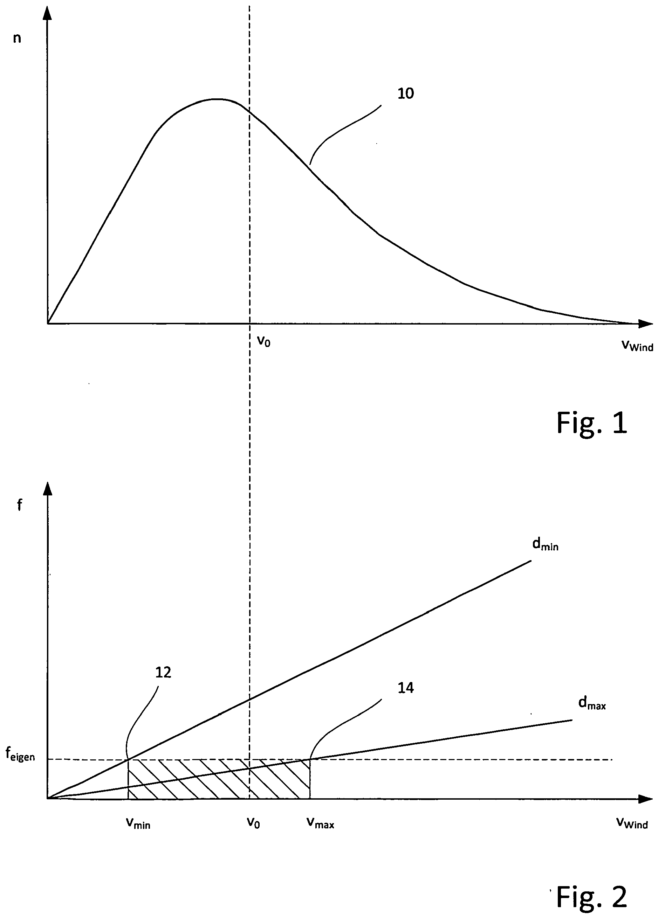

Fig. 1 zeigt die Häufigkeitsverteilung 10 der Windgeschwindigkeit $v_{Wind}$ für einen Standort einer Windenergieanlage. Derartige Häufigkeitsverteilungen besitzen für viele Standorte von Windenergieanlagen eine ähnliche Form, wobei im Wesentlichen die Breite der Verteilung variiert. Die eingezeichnete Windgeschwindigkeit $v_0$ bezeichnet hierbei die Auslegungsgeschwindigkeit, für die die Bemessung des Turmes erfolgen soll. In der Regel ist die Auslegungswindgeschwindigkeit $v_0$ um den Faktor $\sqrt{2}$ größer als die am häufigsten in der Verteilung auftretende Windgeschwindigkeit.

Fig. 2 zeigt den Zusammenhang zwischen der Wirbelablösefrequenz $f_W$ und der Windgeschwindigkeit. Der physikalische Zusammenhang wird durch die Strouhalzahl beschrieben. Demnach ist die Wirbelablösefrequenz proportional zur Windgeschwindigkeit, mit der der Turm dem Wind ausgesetzt ist und umgekehrt proportional zur Breite b des umströmten Querschnitts. Die Proportionalität wird durch die Strouhalzahl St beschrieben. Als Formel ausgedrückt gilt der Zusammenhang:

$$f_W = St\,\frac{v}{b}.$$

Die Erfindung geht von zwei Erkenntnissen aus: Zum einen wird die Anregung zu Querschwingungen durch den Abstand der Wirbelablösefrequenzen zu den Eigenfrequenzen charakterisiert zum anderen werden die Amplituden der Querschwingungen maßgeblich vom Durchmesser im zweiten Bereich beeinflusst. Beide Faktoren sind daraufhin abzustimmen, dass die Beanspruchungen der Konstruktion in einem verträglichen Maße bleiben.

In Fig. 2 eingezeichnet sind beispielhaft zwei Durchmesser $d_{min}$ und $d_{max}$ und die zu untersuchende Eigenfrequenz $f_{eigen}$. Bei der Eigenfrequenz $f_{eigen}$ kann es sich beispielsweise um die erste Eigenfrequenz handeln, die häufig im Bereich von 0,2 Hz liegt. Die zweite Eigenfrequenz ist in der Regel deutlich größer und liegt in einem Bereich von 1,5 Hz - 3 Hz. Geht man von einer Strouhalzahl von ungefähr 0,2 aus, so ergibt sich bei einem Turmdurchmesser von 7,30 m und einer Auslegungswindgeschwindigkeit von 8 m/Sekunde eine Wirbelablösefrequenz von 0,22 Hz, die durchaus im Bereich der ersten Eigenfrequenz liegen kann, was zu einer hohen Anzahl an Querschwingungen mit einer entsprechend großen Zahl an Lastwechseln und großen Schwingungsamplituden über die Lebensdauer der Anlage führen kann.

Wie in Fig. 2 dargestellt, ergeben sich durch die Vorgabe der Eigenfrequenz $f_{eigen}$ zu den beiden Durchmesserwerten $d_{min}$ und $d_{max}$ ein Intervall von Windgeschwindigkeiten, die jeweils durch die Schnittpunkte 12 und 14 und die zugehörigen Geschwindigkeiten $v_{min}$ und $v_{max}$ vorgegeben sind. In dem dargestellten Beispiel aus Fig. 2 liegt die Auslegungswindgeschwindigkeit $v_0$ zwischen den Windgeschwindigkeiten $v_{min}$ und $v_{max}$. Die für die Auslegungswindgeschwindigkeit $v_0$ sich ergebende Wirbelablösefrequenz liegt also bei den beiden vorgegebenen Durchmesserwerten in einem gewissen Abstand zu dem Wert der Eigenfrequenz. Allgemein lässt sich feststellen, dass je größer der Abstand der Auslegungswindgeschwindigkeit $v_0$ von dem kritischen Wert v infolge Turmeigenfrequenz $f_{eigen}$ und dem zu wählenden ersten Durchmesser ist, umso weniger Querschwingungen treten über die Lebensdauer einer Anlage auf. Wie in Fig. 2 leicht zu erkennen, wird das Intervall zwischen $v_{min}$ und $v_{max}$ vergrößert, wenn der kleinere Durchmesser $b_{min}$ verkleinert oder der größere Durchmesser $b_{max}$ vergrößert wird.

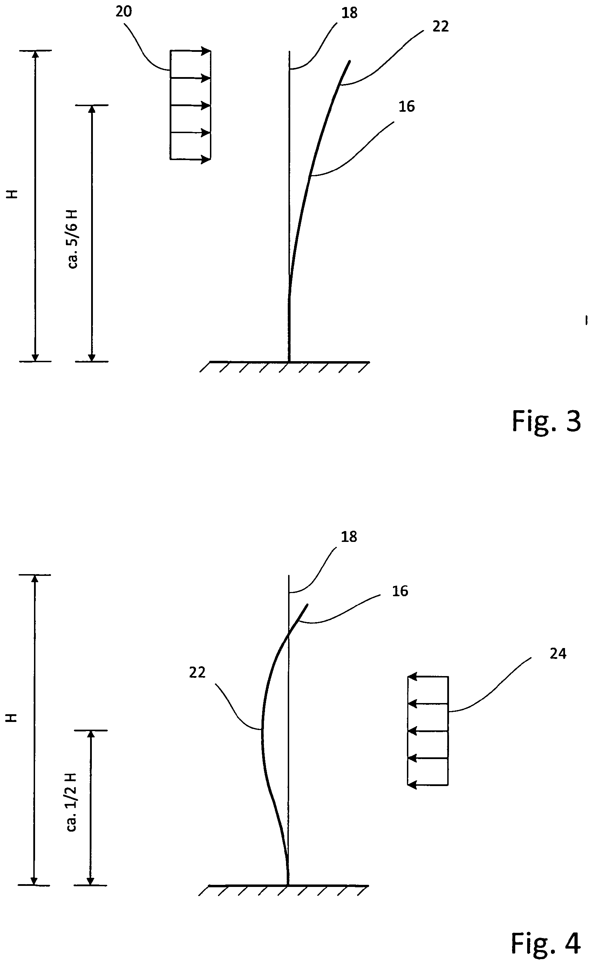

Fig. 3 zeigt die Turmbiegeform bei einer Anregung mit der ersten Eigenfrequenz. Wie in Fig. 3 zu erkennen, ist der Turm 16 deutlich aus der Vertikalen 18 ausgelenkt, wobei mit zunehmender Höhe die Auslenkung zunimmt. Der für die Anregung der Turmschwingung verantwortliche Anregungsbereich 20 in dem sich ein Schwingungsbauch 22 befmdet, besitzt eine Länge von mindestens dem 6-fachen Turmdurchmesser, wobei sein Mittelpunkt sich ungefähr auf 5/6 der Turmhöhe befindet. In dem dargestellten Beispiel erstreckt sich der Anregungsbereich 20 fast bis zum Turmkopf.

Fig. 4 zeigt in einer schematischen Darstellung eine zweite Turmbiegeform, bei der der Turm 16 der Windenergieanlage ungefähr auf halber Höhe einen Schwingungsbauch 22 besitzt. Der Anregungsbereich 24 für die zweite Turmbiegeform befindet sich ungefähr auf halber Höhe der Windenergieanlage, wobei sich der Anregungsbereich 24 über eine Länge von mindestens dem 6-fachen Turmdurchmesser ergibt und sich symmetrisch zur Turmmitte nach oben und nach unten erstreckt.

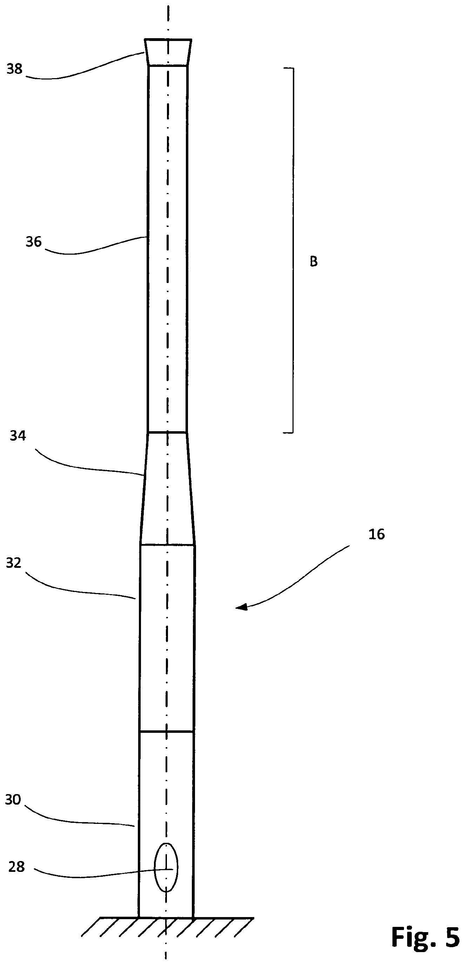

Fig. 5 zeigt in einer schematischen Ansicht den Turm einer Windenergieanlage, der gegen Querschwingungen mit der ersten Eigenfrequenz optimiert ist. Der Turm 16 besitzt an seinem unteren Ende die schematisch dargestellte Eingangsöffnung 28 für den Turm. Der Turm selbst besteht aus Sektionen 30, 32 (optional), 34, 36 und der Turmkopfsektion 38 (Sektionen 36 und 38 könnten auch aus einer Sektion bestehen). Jede Sektion besteht aus übereinander angeordneten Turmsegmenten, die entweder als umlaufende Segmente ausgebildet sind oder aus mehreren, einen Kreis bildenden Segmenten bestehen. Die Turmsektionen 30 und 32 besitzen einen im Wesentlichen konstanten Durchmesser. Die Turmsektion 34 ist als ein Übergangsbereich ausgebildet, der zwischen dem Durchmesser der Turmsektion 32 und dem kleineren Durchmesser für Turmsektion 36 vermittelt. Die Turmsektion 36 besitzt einen reduzierten Turmdurchmesser. Die Turmkopfsektion 38 erweitert sich wieder konisch, um den Maschinenträger (nicht dargestellt) mit seiner Azimutdrehverbindung zu lagern. Die konische Form der Turmkopfsektion 38 begünstigt die Lasteintragung aus dem Maschinenträger in den Turm, ist aber nicht zwingend erforderlich. Es ist möglich, die Azimutdrehverbindung direkt auf die Turmsektion 36 aufzusetzen.

Der Turm 26 aus Fig. 5 besitzt mit seiner Turmsektion 36 einen Bereich B, in dem der wirksame Durchmesser des Turms reduziert ist und somit die Wirbelablösefrequenz größer als in den Turmsektionen 30 und 32 ist.

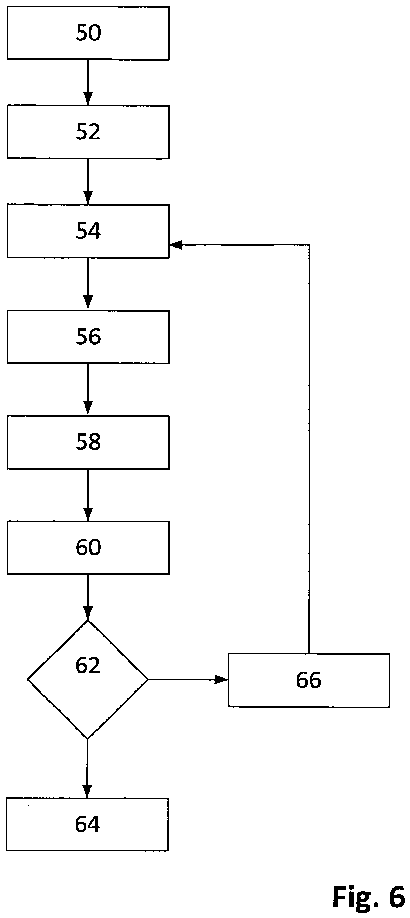

Das erfindungsgemäße Verfahren zur Auslegung eines Turmes wird nachfolgend an dem Flussdiagramm gemäß Fig. 6 näher erläutert. Das Verfahren beginnt mit Verfahrensschritt 50. In dem nachfolgenden Verfahrensschritt 52 wird die Auslegungswindgeschwindigkeit $v_0$ bestimmt. In Verfahrensschritt 54 wird ein Ausgangsdurchmesser $D_A$ für den Turm bestimmt. Es wird angenommen, dass der Turm im Wesentlichen gleichmäßig den Ausgangsdurchmesser $D_A$ besitzt. In einem nachfolgenden Verfahrensschritt 56 wird eine für Querschwingungen relevante Turmeigenfrequenz $f_{eigen}$ bestimmt. Hierbei kann es sich beispielsweise um die erste Turmeigenfrequenz handeln, die sich für den Turm unter Berücksichtigung des Maschinenhauses mit seinem Rotor und den statischen und dynamischen Eigenschaften des Fundamentes ergibt. Die Turmeigenfrequenz $f_{eigen}$

kann beispielsweise gemessen oder numerisch bestimmt werden. In dem Verfahrensschritt 58 wird ein kritischer Durchmesser bestimmt, bei dem der mit Auslegungswindgeschwindigkeit ($v_0$) angeströmte Turm mit der Turmeigenfrequenz schwingt. In Verfahrensschritt 60 wird ein Differenzwert zum kritischen Durchmesser festgelegt, für den sowohl die Anzahl der Lastspiele als auch die Schwingwegamplitude in einem tolerierbaren Bereich liegen.

In dem nachfolgenden Verfahrensschritt 62 wird überprüft, ob die Einwirkungen aus wirbelerregten Querschwingungen in einem tolerierbaren Bereich liegen. Hierzu wird geprüft, ob der Ausgangsdurchmesser um mindestens den vorbestimmten Differenzwert von dem kritischen Durchmesser abweicht. Ist die Abweichung groß genug, so sind die Einwirkungen tolerierbar. Sind die Einwirkungen aus wirbelerregten Querschwingungen tolerierbar, so wird in Verfahrensschritt 64 festgestellt, dass im Hinblick auf die Querschwingungen und deren Anregung der Ausgangsdurchmesser $D_A$ möglich ist. Wird hingegen in Schritt 62 festgestellt, dass die Einwirkungen zu hoch sind, wird in Schritt 66 für den Anregungsabschnitt mit der Länge des 6-fachen Turmdurchmessers ein zweiter Durchmesser definiert. Der Durchmesser des Anregungsabschnitts ist dabei hinreichend von dem kritischen Durchmesser verschieden. Hierfür wird auf die durch die Strouhalzahl St gegebene Proportionalität zwischen Wirbelablösefrequenz und dem Quotienten aus anströmender Windgeschwindigkeit und Durchmesser des Turmes zurückgegriffen. Zur Bestimmung der Länge des Anregungsabschnitts wird der Turmdurchmesser des Anregungsabschnittes verwendet. Sie beträgt mindestens das 6-fache dieses Turmdurchmessers.

Das in dem Flussdiagramm gemäß Fig. 6 dargestellte Verfahren kann iterativ wiederholt werden, wobei in der nachfolgenden Iterationsstufe dann der in dem Verfahrensschritt 66 bestimmte zweite Durchmesser für die nachfolgende Iteration den Ausgangsdurchmesser $D_A$ des Anregungsbereichs bildet.

Bezugszeichenliste

| | |
|---|---|
| 10 | Häufigkeitsverteilung |
| 12 | Schnittpunkt |
| 14 | Schnittpunkt |
| 16 | Turm |
| 18 | Vertikale |
| 20 | Anregungsbereich (1. Eigenfrequenz) |
| 22 | Schwingungsbauch |
| 24 | Anregungsbereich (2. Eigenfrequenz) |
| 28 | Turmeingangsöffnung |
| 30 | Sektion |
| 32 | Sektion |
| 34 | Sektion |
| 36 | Sektion |

38    Turmkopfsektion

**Patentansprüche**

1.  Verfahren zum Auslegen eines Turmes für eine Windenergieanlage, wobei durch die Auslegung eine Anregung des Turmes zu Querschwingungen für eine Auslegungswindgeschwindigkeit reduziert wird, welches folgende Verfahrensschritte aufweist:

    - Bestimmen der Auslegungswindgeschwindigkeit ($v_0$) abhängig von einer mittleren Windgeschwindigkeit an einem Standort der Windenergieanlage,
    - Bestimmen eines Ausgangsdurchmessers ($D_a$) für den Turm,
    - Bestimmen einer Turmeigenfrequenz ($f_{eigen}$) der Windenergieanlage
    - Bestimmen eines kritischen Durchmessers ($D_{krit}$), bei dem der mit der Auslegungsgeschwindigkeit ($v_0$) angeströmte Turm mit der Turmeigenfrequenz ($f_{eigen}$) schwingt,
    - Festlegen eines vorbestimmten Differenzwertes von dem kritischen Durchmesser ($D_{krit}$),
    - wenn der Ausgangsdurchmesser ($D_a$) nicht um mindestens den vorbestimmten Differenzwert von dem kritischen Durchmesser ($D_{krit}$) abweicht, dann wird ein Anregungsabschnitt bestimmt, der einen zweiten Durchmesser ($D_2$) aufweist und eine Länge von mindestens dem 6-fachen des zweiten Durchmessers besitzt und in dem ein Schwingungsbauch bei einer Schwingung mit der bestimmten Turmeigenfrequenz auftritt,
    - wobei der zweite Durchmesser ($D_2$) für den Anregungsabschnitt des Turms von dem kritischen Durchmesser ($D_{krit}$) um mindestens den Differenzwert abweicht.

2.  Verfahren nach Anspruch 1, **gekennzeichnet durch** ein Auswählen des Differenzwertes zum kritischen Durchmesser derart, dass für den zweiten Durchmesser sowohl die Anzahl der Lastspiele als auch die Schwingwegamplitude in einem tolerierbaren Bereich liegen.

3.  Verfahren nach Anspruch 1 oder 2, **gekennzeichnet durch** ein Bestimmen einer neuen Turmeigenfrequenz für den Turm mit dem zweiten Durchmesser für den Anregungsabschnitt.

4.  Verfahren nach Anspruch 3, **gekennzeichnet durch** ein Überprüfen, ob die neue Turmeigenfrequenz für den Turm mit dem Anregungsabschnitt von einer Wirbelablösefrequenz bei Anströmen des Turmes mit der Auslegungswindgeschwindigkeit verschieden ist.

5.  Verfahren nach einem der Ansprüche 1 bis 4, **gekennzeichnet durch** Bestimmen der Turmeigenfrequenz als die erste Turmeigenfrequenz, wobei der Anregungsabschnitt in der oberen Hälfte des Turmes angeordnet ist.

6.  Verfahren nach einem der Ansprüche 1 bis 4, **gekennzeichnet durch** Bestimmen der Turmeigenfrequenz als die zweite Turmeigenfrequenz, wobei der Anregungsabschnitt in einem Bereich von oberhalb bis unterhalb einer Turmmitte angeordnet ist.

7.  Verfahren nach einem der Ansprüche 1 bis 6, **dadurch gekennzeichnet, dass** der zweite Durchmesser mit einem kleineren Wert als der Ausgangsdurchmesser bestimmt wird.

8.  Turm für eine Windenergieanlage, der Sektionen mit im Wesentlichen konstantem Durchmesser besitzt, mindestens einen ersten Bereich mit einem ersten Durchmesser und einen Anregungsabschnitt mit einem zweiten Durchmesser aufweist, wobei der erste Durchmesser von dem zweiten Durchmesser verschieden ist und wobei der Anregungsabschnitt mindestens eine Länge vom 6-fachen Turmdurchmesser des Anregungsabschnitts aufweist, **dadurch gekennzeichnet, dass** der zweite Durchmesser für den Anregungsabschnitt von einem kritischen Durchmesser ($D_{krit}$), bei dem der mit einer Auslegungswindgeschwindigkeit ($v_0$) angeströmte Turm mit einer Turmeigenfrequenz schwingt, um einen vorbestimmten Differenzwert abweicht, um eine Anregung des Turms zu Querschwingungen für die Auslegungswindgeschwindigkeit ($v_0$) zu reduzieren.

9.  Turm für eine Windenergieanlage nach Anspruch 8, der zur Reduzierung einer Anregung zu Querschwingungen mit der ersten Turmeigenfrequenz ausgelegt ist, **dadurch gekennzeichnet, dass** der Anregungsabschnitt sich in der oberen Turmhälfte befindet.

10. Turm für eine Windenergieanlage nach Anspruch 8, der zur Reduzierung einer Anregung zu Querschwingungen mit einer zweiten Turmeigenfrequenz ausgelegt ist, **dadurch gekennzeichnet, dass** der Anregungsabschnitt sich über einen Bereich von oberhalb bis unterhalb einer Turmmitte erstreckt.

11. Turm für eine Windenergieanlage nach einem der Ansprüche 8 bis 10, **dadurch gekennzeichnet, dass** der zweite Durchmesser bevorzugt kleiner als der erste Durchmesser ist.

12. Turm für eine Windenergieanlage nach einem der Ansprüche 8 bis 11, **dadurch gekennzeichnet, dass** der Turm zwei erste Bereiche aufweist, die oberhalb und unterhalb des Anregungsabschnitts angeordnet sind.

**13.** Turm für eine Windenergieanlage nach einem der Ansprüche 8 bis 12, **dadurch gekennzeichnet, dass** zwischen dem ersten Bereich und dem Anregungsabschnitt ein konischer Übergangsbereich vorgesehen ist.

**Claims**

**1.** A method for designing a tower for a wind turbine, wherein an excitation of the tower to transverse oscillations is reduced for a design wind speed, which comprises the following method steps:

   • determining the design wind speed ($v_0$) as a function of a mean wind speed at a location of the wind turbine,
   • determining an initial diameter ($D_a$) for the tower,
   • determining a natural frequency ($f_{eigen}$) of the tower of the wind turbine,
   • determining a critical diameter ($D_{krit}$), at which the tower, hit by air at the design wind speed ($v_0$), oscillates with the natural frequency ($f_{eigen}$),
   • defining a predetermined difference value from the critical diameter ($D_{krit}$),
   • if the initial diameter ($D_a$) does not deviate from the critical diameter ($D_{krit}$) by at least the predetermined difference value, then an excitation section is determined, which has a second diameter ($D_2$) and has a length of at least six times the second diameter and in which an antinode appears in an oscillation with the determined natural frequency of the tower,
   • wherein for the excitation section of the tower, the second diameter ($D_2$) deviates from the critical diameter ($D_{krit}$) by at least the difference value.

**2.** The method according to claim 1, **characterised by** selecting the difference value from the critical diameter such that for the second diameter, both the number of load cycles and the oscillation path amplitude are within a tolerable range.

**3.** A method according to claim 1 or 2, **characterised by** determining a new natural frequency of the tower for the tower having the second diameter for the excitation section.

**4.** The method according to claim 3, **characterised by** checking whether the new natural frequency of the tower for the tower with the excitation section is different from a vortex shedding frequency when the tower is hit by air at the design wind speed.

**5.** A method according to any one of claims 1 to 4, **characterised by** determining the natural frequency of the tower as the first natural frequency of the tower, wherein the excitation section is located in the upper half of the tower.

**6.** A method according to any one of claims 1 to 4, **characterised by** determining the natural frequency of the tower as the second natural frequency of the tower, wherein the excitation section is located in a region from above to below a centre of the tower.

**7.** A method according to any one of claims 1 to 6, **characterised in that** the second diameter is determined with a value smaller than the initial diameter.

**8.** A tower for a wind turbine having sections with an essentially constant diameter, comprising at least a first region with a first diameter and an excitation section with a second diameter, wherein the first diameter is different from the second diameter and wherein the excitation section has a length of at least 6 times the tower diameter of the excitation section, **characterised in that** for the excitation section, the second diameter differs from a critical diameter ($D_{krit}$), at which the tower hit by air at a design wind speed ($v_0$) oscillates with a natural frequency of the tower, by a predetermined difference value, in order to reduce an excitation of the tower to transverse oscillations for the design wind speed ($v_0$).

**9.** The tower for a wind turbine according to claim 8, which is designed to reduce an excitation to transverse oscillations with the first natural frequency of the tower, **characterised in that** the excitation section is located in the upper half of the tower.

**10.** The tower for a wind turbine according to claim 8, which is designed to reduce an excitation to transverse oscillations with a second natural frequency of the tower, **characterised in that** the excitation section extends across a range from above to below a centre of the tower.

**11.** A tower for a wind turbine according to any one of claims 8 to 10, **characterised in that** the second diameter is preferably smaller than the first diameter.

**12.** A tower for a wind turbine according to any one of claims 8 to 11, **characterised in that** the tower has two first regions, which are located above and below the excitation section.

**13.** A tower for a wind turbine according to any one of claims 8 to 12, **characterised in that** a conical transition region is provided between the first region and the excitation section.

**Revendications**

1. Procédé de conception d'une tour pour une éolienne, dans lequel une excitation de la tour à des oscillations transversales est réduite pour une vitesse du vent de conception par la conception, qui comprend les étapes de procédé suivantes:

   • déterminer la vitesse du vent de conception ($v_0$) en fonction d'une vitesse de vent moyenne dans un endroit de l'éolienne,
   • déterminer un diamètre initial ($D_a$) pour la tour,
   • déterminer une fréquence naturelle ($f_{eigen}$) de la tour de l'éolienne,
   • déterminer un diamètre critique ($D_{krit}$), dans lequel la tour, balayé par air avec la vitesse de conception ($v_0$), oscille à la fréquence naturelle ($f_{eigen}$) de la tour,
   • fixer une valeur prédéterminée de différence du diamètre critique ($D_{krit}$),
   • si le diamètre initial ($D_a$) ne diffère pas du diamètre critique ($D_{krit}$) d'au moins la valeur prédéterminée de différence, une section d'excitation est déterminée, qui a un deuxième diamètre ($D_2$) et a une longueur d'au moins six fois le deuxième diamètre, et dans laquelle une ventre apparaît dans une oscillation avec la fréquence naturelle déterminée de la tour,
   • pour la section d'excitation de la tour, le deuxième diamètre ($D_2$) différant du diamètre critique ($D_{krit}$) d'au moins la valeur de différence.

2. Procédé selon la revendication 1, **caractérisé par** une sélection de la valeur de différence au diamètre critique de telle sorte que, pour le deuxième diamètre, le nombre des cycles de charge aussi bien que l'amplitude de la trajectoire des oscillations sont dans une région tolérable.

3. Procédé selon la revendication 1 ou 2, **caractérisé par** une détermination d'une nouvelle fréquence naturelle de tour pour la tour avec le deuxième diamètre pour la section d'excitation.

4. Procédé selon la revendication 3, **caractérisé par** une vérification si la nouvelle fréquence naturelle de la tour pour la tour avec la section d'excitation est différente d'une fréquence de séparation de vortex quand la tour est balayée par la vitesse du vent de conception.

5. Procédé selon l'une quelconque des revendications 1 à 4, **caractérisé par** fixer la fréquence naturelle de la tour comme la première fréquence naturelle de la tour, la section d'excitation étant située dans la moitié supérieure de la tour.

6. Procédé selon l'une quelconque des revendications 1 à 4, **caractérisé par** fixer la fréquence naturelle de la tour comme la deuxième fréquence naturelle de la tour, la section d'excitation étant située dans une région à partir d'au-dessus jusqu'au dessous d'un centre de la tour.

7. Procédé selon l'une quelconque des revendications 1 à 6, **caractérisé en ce que** le deuxième diamètre est fixé avec une valeur inférieure au diamètre initial.

8. Tour pour une éolienne qui a des sections avec diamètre essentiellement constant, comporte au moins une première région avec un premier diamètre et une section d'excitation avec un deuxième diamètre, le premier diamètre étant différent du deuxième diamètre et la section d'excitation ayant une longueur d'au moins 6 fois le diamètre de la tour de la section d'excitation, **caractérisé en ce que** pour la section d'excitation, le deuxième diamètre diffère d'un diamètre critique ($D_{krit}$), dans lequel la tour balayée par une vitesse de vent de conception ($v_0$) oscille avec une fréquence naturelle de la tour, diffère pour une valeur de différence prédéterminée, afin de réduire une excitation de la tour à des oscillations transversales pour la vitesse du vent de conception ($v_0$).

9. Tour pour une éolienne selon la revendication 8, qui est conçue à réduire une excitation à des oscillations transversales avec la première fréquence naturelle de la tour, **caractérisée en ce que** la section d'excitation se trouve dans la moitié supérieure de la tour.

10. Tour pour une éolienne selon la revendication 8, qui est conçue à réduire une excitation à des oscillations transversales avec une deuxième fréquence naturelle de la tour, **caractérisée en ce que** la section d'excitation s'étend à travers d'une région à partir d'au-dessus jusqu'au dessous d'un centre de la tour.

11. Tour pour une éolienne selon l'une quelconque des revendications 8 à 10, **caractérisée en ce que** le deuxième diamètre est de préférence plus petit que le premier diamètre.

12. Tour pour une éolienne selon l'une quelconque des revendications 8 à 11, **caractérisée en ce que** la tour comporte deux premières régions, qui sont situées au-dessus et au-dessous de la section d'excitation.

13. Tour pour une éolienne selon l'une quelconque des revendications 8 to 12, **caractérisée en ce que** une région de transition conique est prévue entre la première région et la section d'excitation.

Fig. 1

Fig. 2

20

18

22

16

H

ca. 5/6 H

## Fig. 3

18

16

24

22

H

ca. 1/2 H

## Fig. 4

**Fig. 5**

**Fig. 6**

**EP 2 703 640 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10336998 A1
- WO 9963219 A
- DE 29612720 U1
- US 7997876 B2
- DE 102011051092 A1
- US 4272929 A
- US 6467233 B1